# EUROPEAN PATENT APPLICATION

(11) **EP 2 055 601 A1**
(43) Date of publication of application: **06.05.2009**
(21) Application number: 07425675.1
(22) Date of filing: 29.10.2007
(51) Int. Cl.: B60W 30/14, B60W 50/08, B60Q 1/54

(54) **Control method for limiting the performances of a road vehicle**

(71) Applicant: MAGNETI MARELLI POWERTRAIN S.p.A., 20011 Corbetta (MI) (IT)
(72) Inventor: Gaviani, Giovanni Maria, 47900 Rimini (IT); Nesci, Walter, 40037 Sasso Marconi (IT); Pennese, Michele, 40059 Medicina (IT); Dalla, Roberto, 40100 Bologna (IT)
(74) Representative: Jorio, Paolo

(57) **Abstract**

A control method of a road vehicle (1); the control method includes the steps of: detecting the position of an accelerator control (16) which is displaced along a predetermined stroke; using the position of the accelerator control (16) to control the generation of a torque generated by the engine (5) of the road vehicle (1) so that the torque is generated according to the position of the accelerator control (16); detecting the current driver's ability by means of a driving ability recognition device (19); and limiting the generation of torque according to the current driver's ability.

## Description

### TECHNICAL FIELD

The present invention relates to a road vehicle control method.

The present invention is advantageously applied to a car, to which explicit reference will be made in the following description without therefore loosing in generality.

### BACKGROUND ART

In order to attempt to make driving safer, modern cars are equipped with a series of electric driving assistance devices; for example, such electronic driving assistance devices may be the ABS (Anti Block System - to prevent wheels locking while braking), the ESP (Electronic Stability Program - to control vehicle stability), the ASP (Anti Skid Program - to prevent the driving wheels from skidding), and the electronic suspension control (to vary the mechanical response of the suspensions to external stresses).

Furthermore, some cars are provided with a selection device which allows the driver to communicate his or her selection of the dynamic behaviour of the car to an electronic control unit; according to the selection made by the driver, the electronic control unit varies the intervention parameters of the electronic driving assistance devices so as to make the dynamic behaviour of the car as compliant to the driver's needs and abilities as possible. In virtue of the above-described selection device, the driver may adapt the dynamic behaviour of the car to his or her own driving style, to his or her driving abilities and to the weather conditions, with a considerable increase in driving safety, specifically in case of hard weather conditions (heavy rain, snow or ice).

An example of the selection device of the above-described type is provided in patent application WO2004087484A1, wherein the selection device consists of a switch which is integrated in the steering wheel of the car and which may turn between five different positions, each of which corresponds to a respective dynamic behaviour of the car.

However, it is not uncommon for the driver to incorrectly estimate, and specifically overestimate, his or her driving abilities; consequently, the selection made by the driver in relation to the dynamic behaviour of the car may reflect a mere aspiration of the driver and not the real driving ability of the driver him or herself. In these situations, the selection made by the driver in relation to the dynamic behaviour of the car is translated into a reduction of driving safety, because the driver is driving a car which inappropriately responds to the real driving abilities of the driver him or herself. Such a situation may easily occur in the case of a young, newly licensed driver who is often led to overestimate his or her driving abilities and to underestimate the dangers of the road.

For this reason, it has recently been suggested to allow newly licensed drivers to drive cars with a limited weight/power ratio only (i.e. lower than a maximum threshold established by law). Such a draft law has the unquestionable advantage of not allowing newly licensed drivers to drive cars with excessively high performances with respect to their driving abilities, but on the other hand also has several disadvantages, because it obliges newly licensed drivers to drive lower segment cars only because they alone have a weight/power ratio lower than the maximum threshold established by law. Indeed, not only does a lower segment car inevitably have a lower passive safety with respect to a higher segment car, but often in a family a newly licensed driver does not have a car with a weight/power ratio lower than the maximum threshold established by law available, and therefore must necessarily quit driving until the end of the statutory restriction period, at the end of which he or she ceases to be legally considered a newly licensed driver and may thus drive any type of car; in this case, it is apparent that the result is the direct opposite of the law spirit, i.e. that newly licensed drivers really practice driving in safety i.e. using cars of modest performances.

### DISCLOSURE OF INVENTION

It is the object of the present invention to provide a road vehicle control method, which control method is free from the above-described drawbacks and, specifically, is easy and cost-effective to implement.

According to the present invention, a road vehicle control system as set forth in the appended claims is provided.

### BRIEF DESCRIPTION OF THE DRAWINGS

The present invention will now be described with reference to the accompanying drawing which illustrates a non-limitative embodiment thereof; specifically, the accompanying figure is a diagrammatic plan view of a car which implements the control method of the present invention.

### PREFERRED EMBODIMENTS OF THE INVENTION

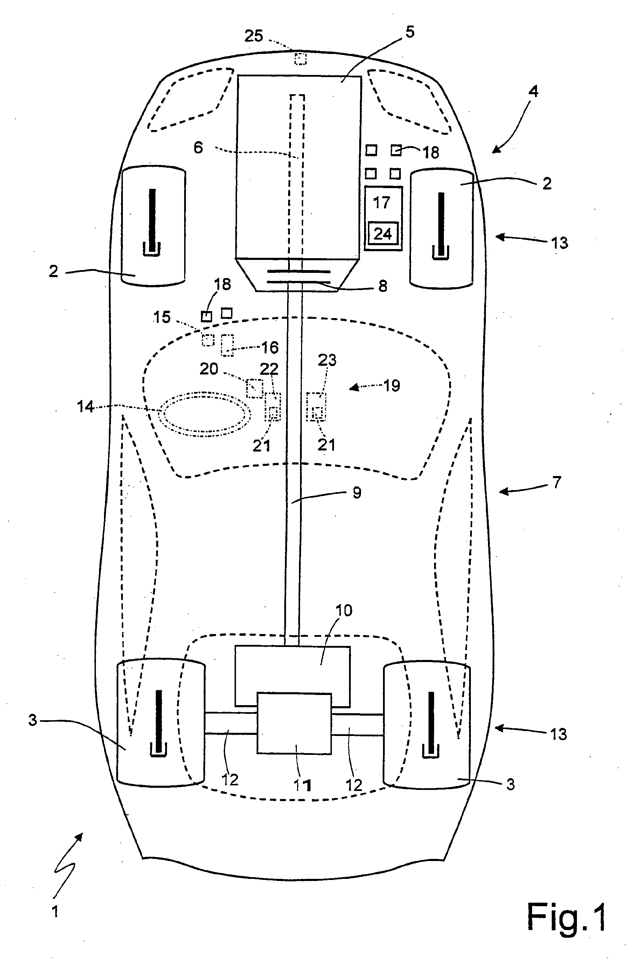

In figure 1, numeral 1 indicates as a whole a car provided with two front wheels 2 and two rear driving wheels 3 which receive the torque from a power system 4.

The power system 4 comprises an internal combustion heat engine 5, which is arranged in a frontal position and is provided with a drive shaft 6, and a servo controlled transmission 7, which transmits the torque generated by the internal combustion engine 5 to the rear driving wheels 3 and comprises a servo controlled clutch 8 accommodated in a cover integral with the internal combustion engine 5.

The clutch 8 is interposed between the drive shaft 6 and a propeller shaft 9 ending in a servo controlled mechanical gearbox 10, which is arranged in a rear position and is provided with a primary shaft connected to the propeller shaft 9 and a secondary shaft connected to a differential 11 from which a pair of axle shafts 12 integral with the rear driving wheels 3 departs. The car 1 further comprises a braking system 13 (diagrammatically shown) comprising four disc brakes, each of which is coupled to a corresponding wheel 2 or 3.

Inside a passenger compartment of the car 1 there is a steering wheel 14, which is adapted to impart a steering angle to the front wheels 2 by means of a servo assisted steering system, a brake control constituted by a brake pedal 15, which is adapted to control the braking system 13 to generate a braking torque on the wheels 2 and 3, and an accelerator control consisting of an accelerator pedal 16, which is adapted to adjust the torque generated by the internal combustion engine 5.

The car 1 further comprises an electronic control unit 17 (diagrammatically shown), which controls the power system 4 and thus drives the internal combustion engine 5 and the servo controlled transmission 7. The electronic control unit 17 is connected to a series of sensors 18, which are distributed inside the car 1 and are adapted to detect the corresponding parameters of the car 1 in real time, such as for example the advancement speed of the car 1, the steering angle of the car 1, the yaw speed of the car 1, the side acceleration of the car 1, the longitudinal acceleration of the car 1, the rotation speed of each rear driving wheel 3, the position of the accelerator pedal 16, the position of the brake pedal 15, the torque generated by the internal combustion engine 5 and the attitude angle β of the car 1, i.e. the angle existing between the advancement direction of the car 1 and the longitudinal axis of the car 1 itself. It is apparent that the electronic control unit 17 may consist of several physically separate processing units reciprocally connected, for example, by a data bus; moreover, in order to detect one or more parameters of the car 1, an estimating algorithm implemented by the electronic control unit 17 itself may be used instead of a physical sensor 18.

The electronic control unit 17 normally detects the position of the accelerator pedal 16 which is displaced along a predetermined stroke and uses the position of the accelerator pedal 16 to directly control the generation of torque so that the generated torque is according to the position of the accelerator pedal 16. In other words, the electronic control unit 17 determines the desired torque according to the position of the accelerator pedal 16 and thus drives the internal combustion engine 5 to make the internal combustion engine 5 generate the desired torque.

Furthermore, the car 1 comprises a driving ability recognition device 19 comprising a reader 20, which is carried by the car 1 and arranged inside the passenger compartment of the car 1 itself, and a plurality of removable personal memory devices 21, each of which is associated to a corresponding driver of the car 1 and contains both a first recognition code of the driver and a second assessment code which indicates the driver's ability. According to a possible embodiment, each removable personal memory device 21 is inserted in a corresponding ignition key 22 of the car 1 and is read in radiofrequency by means of a transponder communication system. Alternatively, each removable personal memory device 21 is inserted in a USB stick 23 which is mechanically inserted in a proper USB port.

In use, the electronic control unit 17 by means of the reader 20 reads the current driver's removable personal memory device 21 in order to detect the current driver's ability and therefore to limit the generation of torque according to the current driver's ability. It is worth emphasizing that in absence of the removable personal memory device 21 (i.e. when the reader 20 cannot read any removable personal memory device 21), the electronic control unit 17 either may not allow to start the engine 5, or may allow to start the engine 5 but not to move the car 1 (e.g. by preventing gear engagement and thus always leaving the servo controlled mechanical gearbox 10 in a neutral position), or may assume that the current driver is an absolute beginner and thus allow the car 1 to move with the maximum limitations reserved to an absolute beginner.

According to a preferred embodiment, the electronic control unit 17 determines a maximum reachable speed and/or acceleration according to the current driver's ability and thus limits the generation of torque to prevent the real speed and/or acceleration of the car 1 from exceeding the maximum reachable speed and/or acceleration. It is worth observing that the torque limitation may be both in terms of real values and in terms of increasing speed, i.e. the first derivative in time of the torque may also be limited in addition to the torque. Preferably, according to the current driver's ability, the electronic control unit 17 determines a first maximum speed and/or acceleration reachable on straights and a second maximum speed and/or acceleration reachable on corners lower than the first maximum speed and/or acceleration reachable on straights. Furthermore, the second maximum speed and/or acceleration reachable on corners is as lower as the curving radius of the corner covered by the car 1 is higher.

According to a possible embodiment, the electronic control unit 17 determines the weather conditions outside the car 1 (essentially by detecting the external temperature and the possible presence of rain by means of a rain sensor coupled to the windscreen) and limits the generation of torque also according to the external weather conditions; typically, in case of a potential risk of ice or rain (or snow), the performances are increasingly limited with respect to warm and dry weather conditions.

According to a possible embodiment, the electronic control unit 17 determines the position of the car 1 by means of a satellite positioning system and limits the generation of torque also according to the position of the car 1. For example, the electronic control unit 17 determines the maximum speed allowed by law in the area where the car 1 is located according to the position of the car 1 and limits the generation of torque also according to the maximum speed allowed by law in the area where the car 1 is located. Alternatively, the electronic control unit 17 determines the maximum recommended speed in the area where the car 1 is located (obviously not higher than the maximum speed allowed by law) and limits the generation of torque also according to the maximum recommended speed in the area where the car 1 is located.

According to a preferred embodiment, the electronic control unit 17 does not only limit the generation of torque according to the current driver's ability, but also determines the operational parameters of active systems of the car 1 according to the current driver's ability. The active systems of the car 1 may comprise, for example, the electronic control of the servo assisted transmission 7, the electronic control of the locking percentage of the self-locking differential 11, the electronic control of the suspension response, the electronic control of the stability of the car 1, the electronic control of the traction of the rear driving wheels 3, and the electronic control of the response of the power steering. In other words, the electronic control unit 17 attempts to adapt the dynamic behaviour of the car 1 to the current driver's ability not only by limiting the performances of the car 1, but also by attempting to adapt the response of the car 1. In other words, the system attempts to give a car 1 which is not very fast and which is of expectable and "sincere" behaviour (i.e. very gradual) to an inexperienced driver so that the driver may predict the manoeuvres to be performed sufficiently in advance and may subsequently perform such manoeuvres calmly and without an excessive execution speed.

According to a possible embodiment, the electronic control unit 17 measures and stores the number of driving hours totally performed by the current driver in the corresponding removable personal memory device 21 and thus defines the current driver's ability also according to the number of driving hours totally performed by the current driver. In this manner, as a driver gradually acquires driving experience, the electronic control unit 17 gradually allows increasing performances to the driver.

According to a possible embodiment, the electronic control unit 17 detects the current driver's identification code which is in the corresponding removable personal memory device 21 and stores, in its own permanent memory 24, the current driver's identification code associated to the time at which the identification code itself was stored at a predetermined time frequency (e.g. every 5 minutes). Typically, the permanent memory 24 manages the identification codes as a FIFO (First In First Out) type queue; in this manner, the recent (e.g. the last month's) log of the driver of the car 1 is stored in the permanent memory 24. As a matter of fact, the permanent memory 24 of the electronic control unit 17 is a "black box" of the drivers of the car 1 which may be used, e.g. by the police, to verify the driver's identity and limitations at a given time (e.g. to verify actual responsibilities in case of accident or driving offence or to verify that a newly licensed driver is actually driving a vehicle with limited performances within the limits established by the Highway Code).

According to a possible embodiment, the electronic control unit 17 verifies whether the current driver's ability corresponds to that of a newly licensed driver and visually indicates that a newly licensed driver is driving by means of at least one light indicator visible from outside the car 1. In this manner, the police and the other road users may immediately see that the car 1 is being driven by a newly licensed driver who may be obliged, for example, to respect lower speed limits than a normal driver. For this purpose, the light indicator 25 may be a light indicator which is already normally present in a car and which is driven in a different manner than usual or may be a light indicator which is not normally present in a car (e.g. a colored light arranged near the plates).

The above-described control method displays many advantages because it allows to effectively and efficiently adapt the dynamic behaviour of the car 1 to the current driver's real driving abilities. Specifically, it is worth noting that the above-described control method is cost-effective and simple to implement in a modern car because it does not essentially require the installation of any additional component with respect to what is normally already present; incidentally, it is worth noting that nearly all the marketed cars are provided with a transponder reader of a memory device embedded in the ignition key which is used as anti-theft system.

In virtue of the above-described control method, the same car (also potentially of high performances) may be shared by several drivers (typically the members of the same family), each of whom may drive a car having a dynamic behaviour perfectly suited to their driving needs. In this manner, a newly licensed driver may drive an appropriately limited car of higher segment (and thus intrinsically safer) maximizing at the same time the newly licensed driver's safety both actively (by performance limitation) and passively (high passive safety of the vehicle).

Obviously, the above-described control method may be applied to any type of road vehicle also different from a car; e.g. the above-described control method may be applied to a motorcycle, a truck, or a coach.

## Claims

1. A control method of a road vehicle (1); the control method comprising the steps of:
detecting the position of an accelerator control (16) which is displaced along a predetermined stroke; and
using the position of the accelerator control (16) to control the generation of a torque generated by an engine (5) of the road vehicle (1) so that the torque is generated according to the position of the accelerator control (16);
the control method is **characterized in that** it comprises the further steps of:
detecting the current driver's ability by means of a driving ability recognition device (19); and
limiting the generation of torque according to the current driver's ability.

2. A control method according to claim 1, and comprising the further steps of:
determining a maximum reachable speed and/or acceleration according to the current driver's ability; and
limiting the generation of torque for preventing the real speed and/or acceleration of the road vehicle (1) from exceeding the maximum reachable speed and/or acceleration.

3. A control method according to claim 2 wherein the step of determining the maximum reachable speed and/or acceleration contemplates the further steps of:
determining a first maximum reachable speed and/or acceleration on straights; and
determining a second maximum reachable speed and/or acceleration on corners lower than the first maximum reachable speed and/or acceleration.

4. A control method according to claim 3 wherein the second maximum reachable speed and/or acceleration is as lower as the curving radius of the corner covered by the road vehicle (1) is higher.

5. A control method according to any one of the claims from 1 to 4 and comprising the further steps of:
determining the weather conditions outside the road vehicle (1); and
limiting the generation of torque also according to the outside weather conditions.

6. A control method according to any one of the claims from 1 to 5 and comprising the further steps of:
determining the position of the road vehicle (1) by means of a satellite positioning system; and
limiting the generation of torque also according to the position of the road vehicle (1).

7. A control method according to claim 6, and comprising the further steps of:
determining the maximum speed allowed by law in the area where the road vehicle (1) is located; and
limiting the generation of torque also according to the maximum speed allowed by law in the area where the road vehicle (1) is located.

8. A control method according to claim 6 or 7, and comprising the further steps of:
determining a maximum recommended speed in the area where the road vehicle (1) is located; and
limiting the generation of torque also according to the maximum recommended speed in the area where the road vehicle (1) is located.

9. A control method according to any one of the claims from 1 to 8 and comprising the further step of determining the operational parameters of active systems of the road vehicle (1) according to the current driver's ability.

10. A control method according to claim 9, wherein the active systems of the road vehicle (1) comprise the electronic control of a servo controlled transmission (7), the electronic control of the locking percentage of a self-locking differential (11), the electronic control of the suspension response, the electronic control of the stability of the road vehicle (1), the electronic control of the traction of the driving wheels (3), and/or the electronic control of the response of a power steering.

11. A control method according to any one of the claims from 1 to 10, wherein the step of detecting the current driver's ability comprises the further steps of:
associating a corresponding removable personal memory device (21) to each driver;
writing an evaluation code which indicates the corresponding driver's ability in each removable personal memory device (21); and
reading the current driver's removable personal memory device (21) by means of a reader (20) carried by the road vehicle (1).

12. A control method according to claim 11, wherein each removable personal memory device (21) is inserted inside a corresponding ignition key of the road vehicle (1).

13. A control method according to claim 11, wherein each removable personal memory device (21) is read in radiofrequency by means of a transponder communication system.

14. A control method according to claim 11, wherein each removable personal memory device (21) is inserted inside a USB stick.

15. A control method according to any one of the claims from 1 to 14, wherein the step of detecting the current driver's ability comprises the further steps of:
measuring and storing the number of driving hours totally performed by the current driver; and
defining the current driver's ability also according to the number of driving hours performed totally by the current driver.

16. A control method according to any one of the claims from 1 to 15 and comprising the further steps of:
detecting an identification code of the current driver; and
storing the current driver's identification code associated to the time at which the identification code itself was stored, at a predetermined time frequency in a permanent memory of the road vehicle (1).

17. A control method according to claim 16, wherein the permanent memory (24) manages the identification codes as a FIFO type queue.

18. A control method according to any one of the claims from 1 to 17 and comprising the further steps of:
verifying whether the current driver's ability corresponding to that of a newly licensed driver; and
visually indicating that a newly licensed driver is driving by means of at least one light indicator visible from outside the road vehicle (1).

19. A road vehicle (1) comprising:
an engine (5);
an accelerator control (16) which is displaced along a predetermined stroke; and
an electronic control unit (17) adapted to detect the position of the accelerator control (16) and to use the position of the accelerator control (16) to control the generation of a torque generated by the engine (5) so that the generated torque depends on the position of the accelerator control (16);
the road vehicle (1) is **characterized in that** it comprises a driving ability recognition device (19) adapted to detect the current driver's ability; the control unit (17) is adapted to limit the generation of torque according to the current driver's ability.
